(19) **Europäisches Patentamt / European Patent Office / Office européen des brevets**

(11) **EP 4 708 070 A1**

(12) # EUROPEAN PATENT APPLICATION

(43) Date of publication:
**11.03.2026 Bulletin 2026/11**

(21) Application number: **25201444.4**

(22) Date of filing: **10.09.2025**

(51) International Patent Classification (IPC):
**G06F 16/28** (2019.01)  **G06F 21/62** (2013.01)

(52) Cooperative Patent Classification (CPC):
**G06F 16/284; G06F 21/6254**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.09.2024 GB 202413280**

(71) Applicant: **Vodafone Group Services Limited Newbury RG14 2FN (GB)**

(72) Inventors:
- **CRUZ, Ana Ccarita**
  **London, W2 6BY (GB)**
- **MANGIANTE, Simone**
  **London, W2 6BY (GB)**

(74) Representative: **Boult Wade Tennant LLP Salisbury Square House 8 Salisbury Square London EC4Y 8AP (GB)**

(54) **SYNTHETIC DATA**

(57)     Methods and apparatus for generating synthetic data based on a reference relational dataset comprising a plurality of tables and a plurality of relationships between the tables. The methods include generating extended tables for each table in the reference relational dataset and generating synthetic extended tables for each extended table. Measures of similarity are then determined between data records in child and parent synthetic extended tables and links between data records determined based on the measures measure of similarity. Generated synthetic data includes data from the synthetic extended tables and for child tables, a foreign key field populated based on the determined links between data records child and parent synthetic extended tables.

**Description**

TECHNICAL FIELD

The present disclosure relates to methods and apparatus for the generation of synthetic data. The methods and apparatus may have particular application for generating synthetic data which mimics a reference relational dataset.

BACKGROUND

In the modern era, data is the backbone of innovation across various industries. However, the use of real-world data for testing purposes presents significant challenges, particularly around privacy concerns and resource constraints. For example, the use of real data for testing purposes can lead to significant privacy risks, particularly in industries that handle sensitive information, such as telecommunications, finance, and personal consumer data.

Synthetic data can provide a viable solution by replicating the statistical properties of real data without containing any personal or otherwise sensitive information. Synthetic data can allow developers and testers to work with datasets that closely mirror real-world scenarios without the risk of exposing confidential or sensitive information. The use of synthetic data can maintain compliance with privacy regulations and can safeguard user trust while ensuring effective testing and development.

Furthermore, testing or development with real-world data can be resource-intensive because large datasets can require substantial storage and processing power, which can be costly and impractical for frequent testing. Synthetic data can offer a more efficient alternative by generating smaller, manageable datasets that represent the key characteristics of real data. This can allow the thorough testing without overburdening computational systems. As a result, potential issues can be identified early in the development process without the need for large-scale data storage solutions. Database constraints and the costs associated with storing and managing large volumes of real data can be prohibitive. Synthetic data can alleviate these burdens by reducing the need for extensive data storage infrastructure. For example, synthetic datasets can be smaller and more tailored to specific testing scenarios, and thus can help to save on both storage requirements and computational resources.

There are several different methods suitable for generating synthetic data replicated single tables of data. However, many real-world datasets comprise relational datasets comprising a plurality of tables and relationships between the tables. Existing methods can effectively generate synthetic data for individual tables but these methods do not retain or replicate relationships between tables.

It is in this context that the present disclosure has been devised.

BRIEF SUMMARY

It has been realised that synthetic data can be efficiently and effectively generated for relational datasets by first generating extended tables based on the tables of a reference relational dataset. The extended tables include repetitions of data values in parent and child tables which are linked together in the reference relational dataset. For example, for a child table which includes links to data records in a parent table, the linked data from the parent table may be included in a corresponding extended child table. In this way the extended tables can be treated independently and independently include information related to relationships between the tables in the reference relational dataset. Synthetic versions of the extended tables may then be generated independently of each other. The synthetic extended tables can be used to determine links between data records which mimic the relationships in the reference relational dataset. In this way the synthetic extended tables can be used to generate a synthetic relational dataset which includes synthetic versions of each table and links between the tables which mimic the relationships in the reference relational dataset.

According to a first aspect of the present disclosure there is provided a computer-implemented method of generating synthetic data based on a reference relational dataset comprising a plurality of tables and a plurality of relationships between the tables. Each table comprises a plurality of data records for a plurality of fields. The plurality of relationships between tables establish each table as one or both of a child table and a parent table. A child table includes a foreign key field containing links to data included in a parent table. The method comprises: generating, for each table in the reference relational dataset, a corresponding extended table comprising: at least a subset of the data in the table of the reference relational dataset; and if the table is a child table, at least a subset of data in a parent table to which the child table includes links; generating, for each extended table, a corresponding synthetic extended table configured to mimic the extended table for which it is generated; for each synthetic extended child table: determining measures of similarity between data records in the synthetic extended child table and data records in a synthetic extended parent table to the synthetic extended child table; and determining, in dependence on the determined measures of similarity, links between data records in the synthetic extended child table and data records in the synthetic extended parent table; and generating synthetic data comprising a plurality of synthetic tables, each synthetic table corresponding to a table in the reference relational dataset, wherein each synthetic table comprises synthetic data included in a corresponding synthetic extended table and for child tables, a foreign key field populated based on the determined links between data records of the synthetic extended child table and a synthetic extended parent table.

The synthetic extended tables may be generated in parallel with each other and/or may be generated independently of each other. In this way, methods for generating synthetic data for single tables may be used to generate the synthetic data. Relationships between tables can be included by the use of the extended tables which include repetitions of data values in both a parent table and a child table. This allows links between data records in the synthetic extended tables to be determined by measures of similarity between data records.

The generated extended tables may further comprise: if the table is a parent table, a field for each child table to the parent table indicating an outdegree of each record of the parent table in the child table.

The determining links between data records in the synthetic extended child table and data records in the synthetic extended parent table may comprise determining the links in dependence on the determined measures of similarity and on data values in the field in the synthetic extended parent table indicating an outdegree of each record of the synthetic extended parent table in the synthetic extended child table.

The determining the links in dependence on the determined measures of similarity and on data values in the field in the synthetic extended parent table indicating an outdegree of each record of the synthetic extended parent table in the synthetic extended child table may comprise determining the links such that each data record in the synthetic extended parent table is linked to no more data records in the synthetic extended child table than the data value in the field indicating an outdegree of the data record of the synthetic extended parent table in the synthetic extended child table.

The determining measures of similarity between data records in the synthetic extended child table and data records in a synthetic extended parent table to the synthetic extended child table may comprise determining the measures of similarity for fields included in the synthetic extended child table and the synthetic extended parent table.

The determining measures of similarity between data records may comprise determining a measure of distance between the data records.

The method may comprise, for fields in the synthetic extended tables which are populated with numerical values, normalising the numerical values. The determining measures of similarity between data records may comprise determining measures of similarity between the normalised numerical values.

The method may comprise: for fields in the synthetic extended tables which correspond to categorical data, encoding categorical data into a numerical representation of the categorical data. The determining measures of similarity between data records may comprise determining measures of similarity between the numerical representation of the categorical data.

The encoding the categorical data may comprise encoding the categorical data included in an extended table corresponding to the synthetic extended table.

The determining, in dependence on the determined measures of similarity, links between data records in the synthetic extended child table and data records in the synthetic extended parent table, may comprise determining the links so as to link relatively similar data records.

The determining, in dependence on the determined measures of similarity, links between data records in the synthetic extended child table and data records in the synthetic extended parent table, may comprise determining the links so as to maximise an overall similarity between linked data records.

The determining, in dependence on the determined measures of similarity, links between data records in the synthetic extended child table and data records in the synthetic extended parent table, may comprise determining the links so as to minimise a total distance between linked data records.

According to a second aspect of the present disclosure there is provided a method of generating extended tables based on a reference relational dataset comprising a plurality of tables and a plurality of relationships between the tables. Each table comprises a plurality of data records for a plurality of fields and wherein the plurality of relationships between tables establish each table as one or both of a child table and a parent table. A child table includes a foreign key field containing links to data included in a parent table. The method comprises: generating, for each table in the reference relational dataset, a corresponding extended table comprising: at least a subset of the data in the table of the reference relational dataset; and if the table is a child table, at least a subset of data in a parent table to which the child table includes links. The method may further comprise generating, for each extended table, a corresponding synthetic extended table configured to mimic the extended table for which it is generated.

According to a third aspect of the present disclosure there is provided a method of linking data records of synthetic extended tables. The method comprises: for each synthetic extended child table: determining measures of similarity between data records in the synthetic extended child table and data records in a synthetic extended parent table to the synthetic extended child table; and determining, in dependence on the determined measures of similarity, links between data records in the synthetic extended child table and data records in the synthetic extended parent table. The method may further comprise: generating synthetic data comprising a plurality of synthetic tables, each synthetic table corresponding to a table in the reference relational dataset, wherein each synthetic table comprises synthetic data included in a corresponding synthetic extended table and for child tables, a foreign key field populated based on the determined links between data records of the synthetic extended child table and a synthetic extended parent table.

According to a fourth aspect of the present disclosure there is provided a computer-readable medium comprising instructions which, when executed by a computing apparatus, cause the computing apparatus to carry out a method of any one of the first aspect, second aspect and/or third aspect.

According to a fifth aspect of the present disclosure there is provided a computing apparatus comprising: one or more processors; and memory comprising instructions which when executed by one or more of the processors cause the computing apparatus to be operable to perform a method according to any one of the first aspect, second aspect and/or third aspect.

It will be appreciated from the foregoing disclosure and the following detailed description of the examples that certain features and implementations described as being optional in relation to any given aspect of the disclosure set out above should be understood by the reader as being disclosed also in combination with the other aspects of the present disclosure, where applicable. Similarly, it will be appreciated that any attendant advantages described in relation to any given aspect of the disclosure set out above should be understood by the reader as being disclosed as advantages of the other aspects of the present disclosure, where applicable. That is, the description of optional features and advantages in relation to a specific aspect of the disclosure above is not limiting, and it should be understood that the disclosures of these optional features and advantages are intended to relate to all aspects of the disclosure in combination, where such combination is applicable.

BRIEF DESCRIPTION OF THE DRAWINGS

Certain examples of the present disclosure will now be described, with reference to the accompanying drawings, in which:

- FIG. 1 is a schematic illustration of an example relational dataset;

- FIG. 2 is a schematic illustration of data records and fields of tables of an example reference relational dataset;

- FIG. 3 is a flowchart of a method for generating synthetic data;

- FIG. 4 is a schematic illustration of example extended tables;

- FIG. 5 is a schematic illustration of example synthetic extended tables;

- FIG. 6 is a schematic illustration of data records between which measures of similarity are to be determined;

- FIG. 7 is a schematic illustration of a synthetic relational dataset;

- FIG. 8 is a table showing comparative results of performance metrics for a synthetic relational dataset generated using methods disclosed herein;

- FIG. 9 is a table showing further comparative results of performance metrics for a further synthetic relational dataset generated using methods disclosed herein;

- FIG. 10 is a table showing still further comparative results of performance metrics for a still further synthetic relational dataset generated using methods disclosed herein;

- FIG. 11 is a table showing still further results of performance metrics for a still further synthetic relational dataset generated using methods disclosed herein; and

- FIG. 12 is a schematic illustration of an electronic device.

DETAILED DESCRIPTION

Hereinafter, examples of the disclosure are described with reference to the accompanying drawings. However, it should be appreciated that the disclosure is not limited to the described examples, and all changes and/or equivalents or replacements thereto also belong to the scope of the disclosure. The same or similar reference denotations may be used to refer to the same or similar elements throughout the specification and the drawings.

As used herein, the terms "have," "may have," "include," or "may include" a feature (e.g., a number, function, operation, or a component such as a part) indicate the existence of the feature and do not exclude the existence of other features. Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

As used herein, the terms "A or B," "at least one of A and/or B," or "one or more of A and/or B" may include all possible combinations of A and B. For example, "A or B," "at least one of A and B," "at least one of A or B" may indicate all of (1) including at least one A, (2) including at least one B, or (3) including at least one A and at least one B.

As used herein, the terms "first" and "second" may modify various components regardless of importance and do not limit the components. These terms are only used to distinguish one component from another. For example, reference to a first component and a second component may indicate different components from each other regardless of the order or importance of the components.

It will be understood that when an element (e.g., a first element) is referred to as being (physically, operatively or communicatively) "coupled with/to," or "connected with/to" another element (e.g., a second element), it can be coupled or connected with/to the other element directly or via a third element. In contrast, it will be understood that when an element (e.g., a first element) is referred to as being "directly coupled with/to" or "directly connected with/to" another element (e.g., a second element), no other element (e.g., a third element) intervenes between the element and the other element.

The terms as used herein are provided merely to describe some embodiments thereof, but not to limit the scope of other embodiments of the disclosure. It is to be understood that the singular forms "a," "an," and "the" include plural references unless the context clearly dictates otherwise. All terms including technical and scientific terms used herein have the same meaning as commonly understood by one of ordinary skill in the art to which the embodiments of the disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

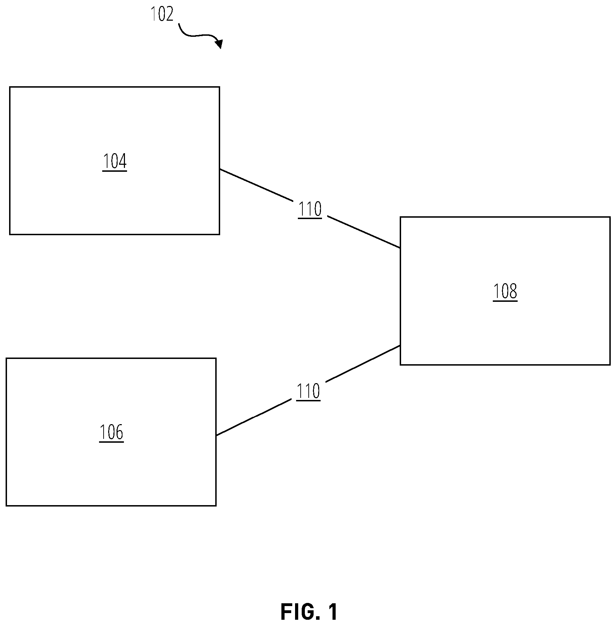

FIG. 1 is a schematic illustration of a relational dataset 102. The relational dataset 102 comprises a plurality of interrelated tables 104, 106, 108. As will be explained in further detail below, each table includes a plurality of data records, each data record including a plurality of data values for a plurality of fields. Tables are typically arranged such that each row in a table corresponds to a different data record and each column in a table corresponds to a different field.

The relational dataset 102 further comprises a plurality of relationships 110 between tables. The relationships 110 typically comprise a reference or link in a data record of a first table to a data record in a second table in the relational dataset 102. The relationships 110 between tables establish each table as one or both of a parent table and a child table. A parent table is a table which comprises data records which are referred to or linked to in data records in another table. A child table is a table which comprises data records which include links or references to data records in another table.

As will be explained in further detail below, a parent table comprises at least one field which is referred to as a primary key. A primary key field comprises data values for each data record which function as an identifier of each data record which can be used to link to the data record from another table. A child table comprises at least one field which is referred to as a foreign key. A foreign key field comprises data values for each data record which link to data records in another (parent) table. For example, a foreign key field may comprise data values corresponding to identifiers included in a primary key field of a parent table. A data value in a foreign key field of a child table which corresponds to a data value in a primary key field of a parent table serves to establish a link between a data record in the child table and a data record in the parent table. Alternatively, this may be referred to as a data record in a child table including a reference to a data record in a parent table.

The example relational dataset 102 shown in FIG. 1, may be considered to comprise a first parent table 104, a second parent table 106 and a child table 108. The first parent table 104 is a parent table to the child table 108. Similarly, the second parent table 106 is a parent table to the child table 108. In such an example, the first parent table 104 comprises a primary key which serves as an identifier for each data record in the first parent table 104. Similarly, the second parent table 106 comprises a primary key which serves as an identifier for each data record in the second parent table 106. The child table 108 may also include a primary key which serves as an identifier of each data record in the child table 108. The child table 108 may further comprise a first foreign key and a second foreign key. The first foreign key may include identifiers corresponding to an identifier included in the primary key of the first parent table 104 so as to establish links between the data records in the child table 108 and data records in the first parent table 104. The second foreign key may include identifiers corresponding to identifiers in the primary key of the second parent table 106 so as to establish links between data records in the child table 108 and data records in the second parent table 106.

Whilst the example relational dataset 102 shown in FIG. 1 includes a first parent table 104 and a second parent table 106, both of which are parent tables to the same child table 108, relational datasets may include different numbers of tables and different relationships between tables. For example, whilst not shown in FIG. 1, in some examples one or more tables may serve as both a parent table and a child table. For example, a table may include both a primary key which is linked to in a child table and at least one foreign key which includes links to a parent table (the parent table being a parent to the child table). A parent table may have one or a plurality of child tables. For example, as shown in the example of FIG. 1 (for the first parent table 104 and the second parent table 106), there may be a single child table which includes a foreign key containing links to a parent table. In other examples, there may be a plurality of child tables which include foreign keys containing links to a primary key of the same parent table. Similarly, a child table may have one or a plurality of parent tables. For example, as shown in the example of FIG. 1 (for the child table 108), a child table may include a plurality of foreign keys each containing links to different parent tables. In other examples, a child table may include a single foreign key containing links to a single parent table.

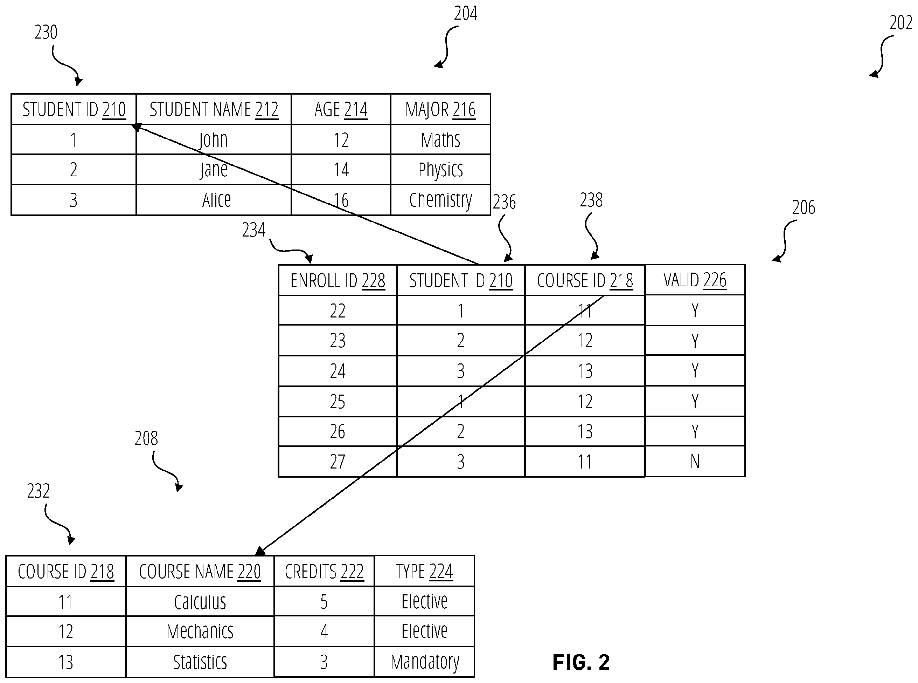

FIG. 2 is a schematic illustration of a specific example of a relational dataset 202. The relational dataset 202 shown in FIG. 2 has the same basic structure as the relational dataset 102 described above with reference to FIG. 1. For example, the relational dataset 202 includes a first parent table comprising a student table 204, a second parent table comprising a course table 208 and a child table comprising an enrollment table 206. The enrollment table 206 is a child table to the student table 204 and a child table to the course table 208. Put another way, the student table 204 is a parent table to the enrollment table 206 and the course table 208 is a parent table to the enrollment table 206.

In the example shown in FIG. 2 the student table 204 comprises a plurality of data records providing information about a plurality of students. Each data record corresponds to a different student and is shown as a different row of the student table 204 in FIG. 2. The student table 204 includes a plurality of fields which are shown as different columns of the student table 204 of FIG. 2 In particular, the student table 204 includes a student ID field 210, a student name field 212, and a major field 216. In the example shown in FIG. 2 the student table 204 includes three data records shown as three rows in the table 204, each populated with data values for each field.

The student ID field 210 serves as a primary key 230 of the student table 204 and is populated with data values which serve as unique identifiers of each data record in the student table 204. In the example shown in FIG. 2 the student ID field 210 is populated with data values comprising numerical values. However any suitable form of unique identifier may be used.

The student name field 212 is populated with text corresponding to a name of each student. The age field 214 is populated with a numerical value corresponding to the age of each student. The major field 216 is populated with text corresponding to a major subject of each student. The data values of the major field 216 are limited to one of a finite number of discrete values. For example, the major field 216 may only be populated by one of a limited number of major subjects which are available. The major field 216 may therefore be treated as and referred to as a categorical field.

The course table 208 includes a plurality of data records corresponding to a plurality of different courses which a student may enroll in. Each row of the course table 208 shown in FIG. 2 corresponds to a different data record and a different course. The course table 208 includes a course ID field 218, a course name field 220, a credits field 222 and a type field 224. The course ID field 218 serves as a primary key 232 of the course table 208 and is populated with data values which serve as unique identifiers of each data record in the course table 208. In the example shown in FIG. 2 the course ID field 218 is populated with data values comprising numerical values, however any suitable form of unique identifier may be used.

The course name field 220 is populated with text corresponding to a name of each course. The credits field 222 is populated with a numerical value representing a number of credits which each course corresponds to. The type field 224 is populated with text corresponding to a type of each course. The type field 224 may be a categorical field. For example, as shown in FIG. 2 the type field 224 may be populated with one of a limited number of types, such as "Elective" or "Mandatory".

The enrollment table 206 includes a plurality of data records corresponding to a plurality of different enrollments of a given student on a given course. Each row of the enrollment table 206 shown in FIG. 2 corresponds to a different data record and a different instance of an enrollment. The enrollment table 206 includes an enroll ID field 228, a student ID field 210, a course ID field 218 and a valid field 226. The enroll ID field 228 serves as a primary key 234 of the enrollment table 206 and is populated with data values which serve as unique identifiers of each data record in the enrollment table 206. In the example shown in FIG. 2 the enroll ID field 228 is populated with data values comprising numerical values, however any suitable form of unique identifier may be used.

The student ID field 210 serves as a foreign key 236 to provide links to data records in the student table 204. The student ID field 210 is populated with data values corresponding to data values from data records in the student ID field 210. In particular, the data values in the student ID field 210 in the enrollment tables 206 provide links to a data record in the student table 204 which is populated with the same data value in the student ID field 210. For example, the first data record shown in the first row of the enrollment table 206 is populated for the student ID field 210 with the data value "1" indicating a link to the data record in the student table 204 which also has a data value of "1". That is, the first data record shown in the first row of the enrollment table 206 corresponds to an enrollment of the student having a student name of "John".

The course ID field 218 serves as a foreign key 238 to provide links to data records in the course table 208. The course ID field 218 is populated with data values corresponding to data values from data records in the course ID field 218.

In particular, the data values in the course ID field 218 in the enrollment tables 206 provide links to a data record in the course table 208 which is populated with the same data value in the course ID field 218. For example, the first data record shown in the first row of the enrollment table 206 is populated in the course ID field 218 with the data value "11" indicating a link to the data record in the enrollment table 206 which also has a data value of "11". That is, the first data record shown in the first row of the enrollment table 206 corresponds to an enrollment in the course having a course name of "Calculus".

The valid field 226 is populated with text corresponding to a validity status of each enrollment. The valid field 226 may be a categorical field. For example, as shown in FIG. 2 the valid field 226 may be populated with one of a limited number of types, such as "Y" to indicate a valid enrollment or "N" to indicate an invalid enrollment.

The specific tables, fields, data records and data values which are shown in FIG. 2 are provided merely by way of illustrative example. The methods and apparatus disclosed herein may be applied to other forms of relational datasets, which may include different tables, relationships, fields, data records and/or data values. A relational dataset may include many more data records than those illustrated in FIG. 2

It may be desirable to generate a synthetic relational dataset which mimics a reference relational dataset. For example, it may be desirable to generate a synthetic relational dataset which has similar properties, relationships and/or statistical characteristics as the reference relational dataset. It may be desirable for a synthetic relational dataset to not include sensitive, confidential or personally identifiable information. For example, it may be desirable for a synthetic relational dataset to not include personal attributes such as real names and/or other personally identifiable information such as age, address etc., which relate to real people and/or entities. The generation of a synthetic relational dataset may therefore enable the generation of data which can be used for a variety of purposes such as testing and validation and without the use of personal and/or protected data.

Existing methods of generating synthetic data include methods for generating synthetic data for individual tables. For example, there are a variety of existing methods such as statistical and deep learning methods which can generate synthetic data for single tables. However, the generation of synthetic data for single tables using existing methods treats each table interdependently and does not generate relationships between synthetic tables. Existing methods for the generation of synthetic data for single tables does not therefore generate a synthetic relational dataset which includes relationships between tables.

Generating synthetic relational dataset is a complex task and a limited number of models have been developed for this task. Examples of models for generating synthetic relational datasets include the REaLTabFormer model [1] and the Synthetic Data Vault (SDV) model [2]. However, the both of these models have been found to be computationally expensive, have been found to generate low quality results for relational datasets and/or can only be used for a limited number of tables.

Methods and apparatus disclosed herein have been found to generate high quality synthetic relational datasets which closely mimic reference relational datasets and with reduced computational complexity when compared to some existing methods.

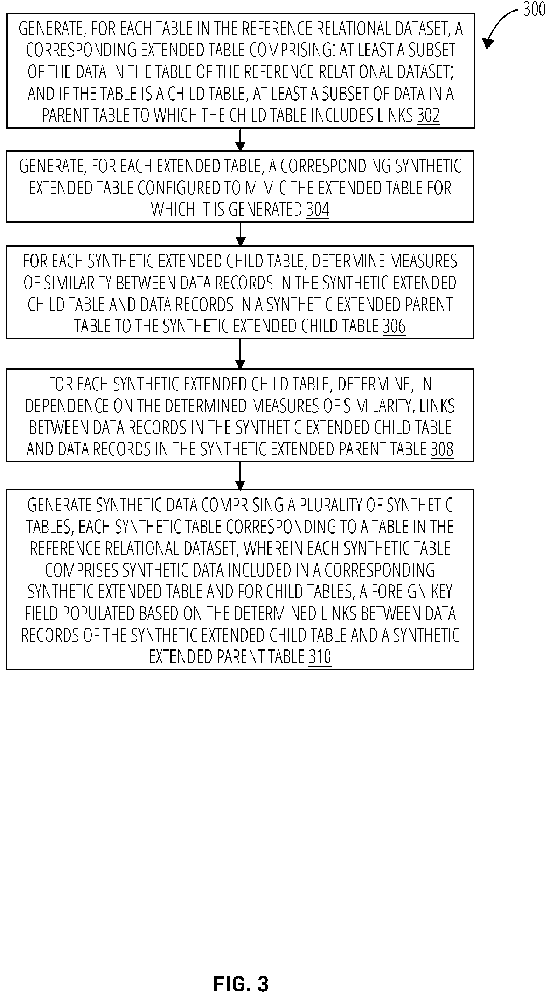

FIG. 3 is a flowchart of a method 300 for generating synthetic data based on a reference relational dataset. In particular, the method 300 may be used to generate a synthetic relational dataset which mimics a reference relational dataset. The method 300 of FIG. 3 may be computer implemented. For example, the method 300 of FIG. 3 may be implemented by one or more electronic devices, such as one or more computing devices.

The method 300 will be described with reference to the relational dataset 202 shown in FIG. 2 which will be treated as a reference relational dataset for which synthetic data is to be generated.

At step 302 of the method 300, for each table in the reference relational dataset, a corresponding extended table is generated. A generated extended table comprises data from the table of the reference relational dataset and may comprise information about any parent tables to the table and any child tables to the table. In particular, a generated extended table comprises at least a subset of the data in the table of the reference relational dataset (for which the extended table is generated) and, if the table is a child table, at least a subset of data in a parent table to which the child table includes links. A generated extended table may further comprise, if the table is a parent table, a field for each child table to the parent table indicating an outdegree of each record of the parent table in the child table. An outdegree of a data record of a parent table in the child table comprises a number of times that the data record in the parent table is linked to from the child table. For example, for a given data record in a parent table, the outdegree of that data record in the child table may comprise a number of data records in the child table which include the primary key identifier of the parent table data record in the foreign key of the child table.

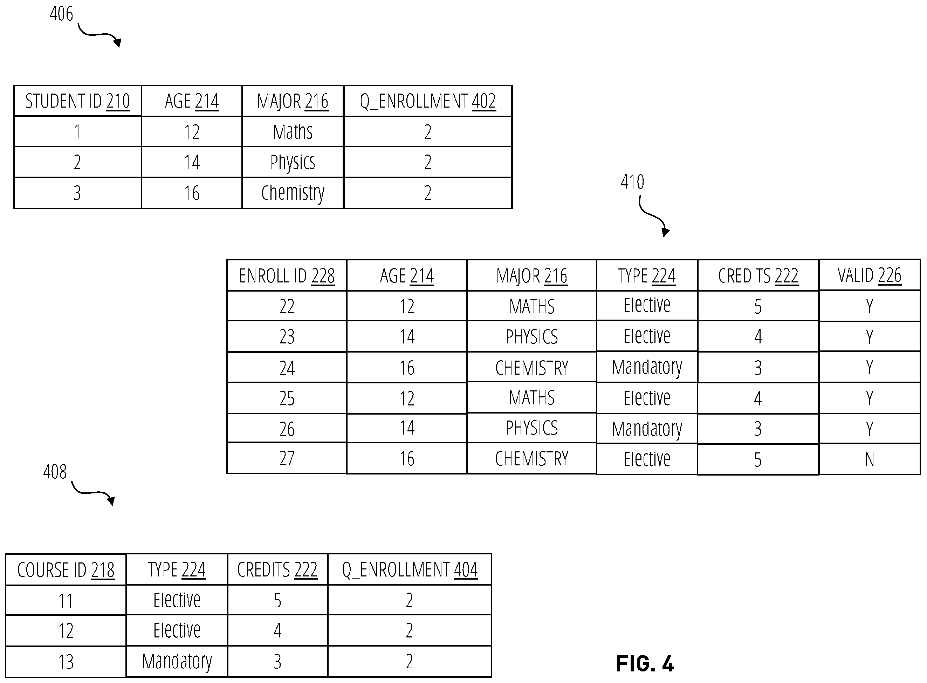

FIG. 4 is a schematic illustration of extended tables which are generated for each of the tables in the relational dataset 202 shown in FIG. 2. In particular, FIG. 4 includes an illustration of an extended student table 406 generated for the student table 204, an extended course table 408 generated for the course table 208 and an extended enrollment table 410 generated for the enrollment table 206.

The extended student table 406 includes the age field 214 and the major field 216 of the student table 204 shown in FIG. 2. The extended student table 406 therefore includes at least a subset of the data in the student table 204, for which the extended student table 406 is generated. In the example shown in FIG. 4, the extended student table 406 is also shown to include the student ID field 210 which forms the primary key of the student table 204. This student ID field 210 is shown in FIG. 4 in order to facilitate understanding and tracking of data records in the explanation provided herein. However, according to examples disclosed herein a primary key field of a table may not be included in an extended table. In particular, a primary key field may not be included in an extended table for which a corresponding synthetic extended table is generated as will be described below.

In the example shown in FIG. 4, the student name field 212 of the student table 204 of FIG. 2 is not included in the extended student table 406. In accordance with at least some examples disclosed herein, free text fields such as the student name field 212 may not be included in an extended table. As will be described below, the extended tables may form the basis for generating synthetic versions of the extended tables. At least some methods of generating synthetic data based on reference data may not be suitable for generating synthetic versions of free text fields. Accordingly in at least some examples, free text fields may not be included in extended tables. However, in other examples, free text fields may be included and synthetic versions of free text fields may be generated.

The major field 216 is populated with text. However, as described above, the major field 216 may comprise a categorical field which can only be populated with one of a limited number of possible data values. Accordingly, the major field 216 is treated as a categorical field rather than a free text field and is included in the extended student table 406.

The extended student table 406 further includes a Q_enrollment field 402. The Q_enrollment field 402 indicates an outdegree of each data record of the student table 204 in the enrollment table 206 (which is a child table to the student table 204). As was explained above, an outdegree of a data record of a parent table comprises a number of data records in the child table which refer to the data record in the parent table. For example, as can be seen in FIG. 2, the foreign key 236 in the enrollment table 206 which refers to the student table 204 (i.e., the student ID field 210 in the enrollment table 206) includes two instances of each student ID. That is, each unique student ID (as defined in the primary key 230 of the student table 204) appears twice in the corresponding foreign key 236 of the enrollment table 206. Put another way, the enrollment table 206 includes two course enrollments for each student listed in the student table 204. The outdegree of each data record of the student table 204 in the enrollment table 206 is 2 as indicated in the Q_enrollment field 402 in the extended student table 406.

The extended course table 408 also includes a subset of the data included in the course table 208. In particular, the extended course table 408 includes the type field 224 and the credits fields 222. Similarly, to the extended student table 406 described above, the extended course table 408 is also shown to include the primary key 232 of the course table 208 in the form of the course ID field 218. However, in some examples the extended course table 408 may not be considered to include the course ID field 218.

The course name field 220 may be considered to be a free text field and thus, for the reasons described above with reference to the student name field 212, the course name field 220 is not included in the extended course table 408 which is shown in FIG. 2. In other examples, a free text field may be included in an extended table and thus, for example, the course name field 220 may be included in the extended course table 408.

The extended course table 408 further comprises a Q_enrollment field 404. Similarly to the Q_enrollment field 402 described above with reference to the extended student table 406, the Q_enrollment field 404 of the extended course table 408 indicates an outdegree of each data record of the course table 208 in the enrollment table 206. That is, the Q_enrollment field 404 indicates the number of data records in the enrollment table 206 for which the foreign key 238 (i.e., the course ID field 218 in the enrollment table 206) is populated with the course ID of that data record. For example, as can be seen in FIG. 2, the foreign key 238 in the enrollment table 206 which refers to the course table 208 (i.e., the course ID field 218 in the enrollment table 206) includes two instances of each course ID. That is, each unique course ID (as defined in the primary key 232 of the course table 208) appears twice in the corresponding foreign key 238 of the enrollment table 206. Put another way, the enrollment table 206 includes two enrollments for each course listed in the course table 208. The outdegree of each data record of the course table 208 in the enrollment table 206 is 2 as indicated in the Q_enrollment field 404 in the extended course table 408.

The extended enrollment table 410 includes a subset of the data included in the enrollment table 206. In particular, the extended enrollment table 410 includes the valid field. Similarly, to the extended student table 406 and the extended course table 408 described above, the extended enrollment table 410 is also shown to include the primary primary key 234 of the enrollment table 206 in the form of the enroll ID field 228. However, in some examples the extended enrollment table 410 may not be considered to include the enroll ID field 228.

Since the enrollment table 206 is a child table, the extended enrollment table 410 further comprises at least a subset of data in a parent table to which the extended enrollment table 410 includes links. The enrollment table 206 is a child table to two parent tables (the student table 204 and the course table 208) and includes two foreign keys 236, 238 linking to parent tables. The extended enrollment table 410 therefore includes at least a subset of the two parent tables to the extended enrollment table 410. That is, the extended enrollment table 410 includes at least a subset of the data included in the student table 204 and at least a subset of the data included in the course table 208.

In more detail the extended enrollment table 410 includes the age field 214 and the major field 216 from the student table 204 and the type field 224 and the credits field 222 from the course tables 208. For corresponding reasons to those described above with reference to the extended student table 406 and the extended course table 408, the free text fields of the student table 204 and the course table 208 are not included in the extended enrollment table 410 in the illustrated example. However in some examples free text fields from parent tables may also be included in an extended child table (e.g., the extended enrollment table 410).

The data values of these fields are populated (in the extended enrollment table 410) with the respective data values from the data records in the relevant parent table which are linked to in the relevant foreign key 236, 238 of the enrollment table 206.

For example, the first data record in the enrollment table 206 links to the student ID "1" in the foreign key 236 which links to the student table 204. Accordingly, for the first data record in the extended enrollment table 410, the age field 214 and major field 216 are populated with data values from the age field 214 and major field 216 for the data record in the student ID field 210 having the student ID "1". That is, for the first data record in the extended enrollment table 410, the age field 214 is populated with the value "12" and the major field 216 is populated with the value "MATHS" since these are the values in the corresponding fields in the student table 204 for the data record which is linked to the first data record in the enrollment table 206.

The first data record in the enrollment table 206 links to the course ID "11" in the foreign key 238 which links to the enrollment table 206. Accordingly, for the first data record in the extended enrollment table 410, the type field 224 and the credits field 222 are populated with the data values from the type field 224 and the credits field 222 for the data record in the course table 208 having the course ID "11". That is, for the first data record in the extended enrollment table 410, the type field 224 is populated with the value "Elective" and the credits field 222 is populated with the value "5" since these are the values in the corresponding fields in the course table 208 for the data record which is linked to the first data record in the enrollment table 206.

The remaining data records in the enrollment table 206 are populated in a corresponding way such that the enrollment table 206 includes the data from parent tables which is linked to in the foreign keys 236, 238 of the enrollment table 206 in the relational dataset 202. The extended tables may be considered as independent tables since the data from the parent tables which was linked to in the child table of the relational dataset 202 has been incorporated into the extended enrollment table 410 (which is an extended child table).

The extended enrollment table 410 does not include the foreign keys 236, 238 from the enrollment table 206. That is, the extended enrollment table 410 does not include the student ID field 210 or the course ID field 218. The foreign keys 236, 238 are instead replaced with the data from the parent tables (student table 204 and course table 208) which was linked to in the foreign keys 236.

At step 304 of the method 300 of FIG. 3, for each extended table, a corresponding synthetic extended table is generated. A synthetic extended table is generated to mimic the data in the extended table for which it is generated. For example, the synthetic extended table may be generated to mimic properties, relationships and/or statistical characteristics of the data included in the extended table for which the synthetic extended table is generated. Any suitable method of generating synthetic data may be used in step 304. As was explained above, each extended table may be considered to be and treated as an independent table. A suitable method of generating synthetic data for single tables may be therefore be used independently for each extended table. That is, the relationships between tables in the reference relational dataset 202 need not be considered in the generation of synthetic versions of each extended table. Accordingly any suitable method of generating synthetic data for a single table may be used. A suitable method for generating the synthetic extended tables may comprise a statistical method and/or a deep learning method. To generated the results described later herein the Synthpop [3] package is used generate synthetic extended tables. Synthpop is an R package configured to generate synthetic datasets resembling reference datasets (real-world datasets) whilst safeguarding sensitive information in the reference dataset. The generated synthetic datasets resemble statistical characteristics of the reference datasets.

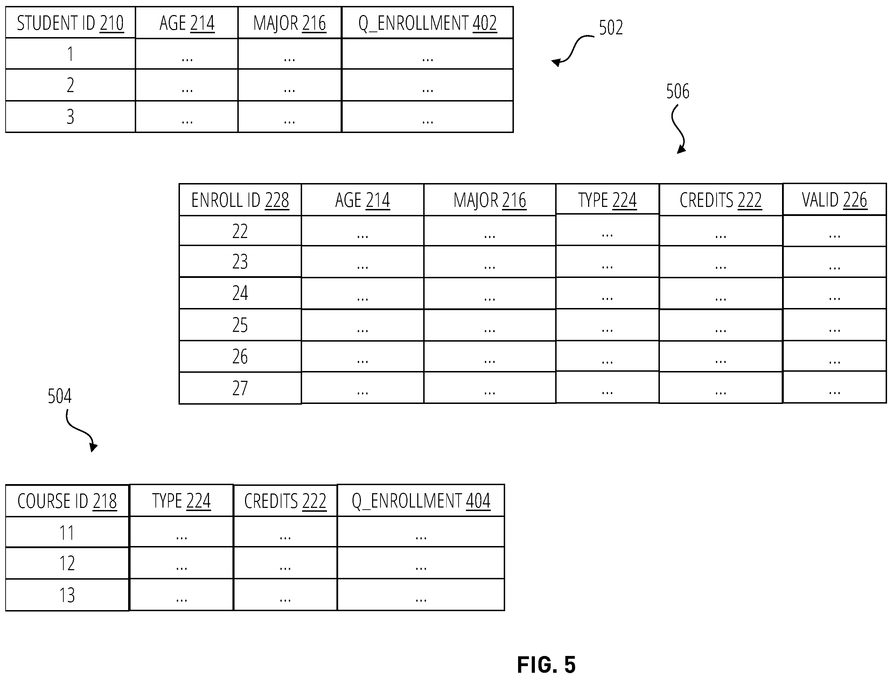

FIG. 5 is schematic illustration of synthetic extended tables which are generated for each of the extended tables shown in FIG. 3. In particular, FIG. 5 includes an illustration of a synthetic extended student table 502 generated for the extended student table 406, a synthetic extended course table 504 generated for the extended course table 408 and a synthetic extended enrollment table 506 generated for the extended enrollment table 410. In the illustration shown in FIG. 4, the data values in the extended synthetic tables are shown as "..." to indicate that the original data included in the reference relational dataset 202 is replaced with synthetic data. In practice, the data values in the extend synthetic tables will comprise data values which mimic the data in the extended tables for which they are generated.

In the example shown in FIG. 5, the synthetic extended tables are generated as having the same number of data records as the extended tables for which they are generated. However, in other examples, the synthetic extended tables may be generated to include fewer or more data records than the extended tables for which they are generated. In some examples, it may be desirable to generate a synthetic relational dataset which is smaller than a reference relational dataset for which it is generated. For example, it might be desirable to generate a reference relational dataset for testing purposes which is not too large so as to allow for relatively efficient testing. In such examples, the synthetic extended tables may be generated to include fewer data records than the extended tables for which they are generated.

In order to facilitate understanding and tracking of data records in the explanation provided herein, the primary keys of each table are also shown and populated in the synthetic extended tables shown in FIG. 5. The primary key fields do not typically include sensitive data which needs to be excluded in a synthetic dataset. Accordingly, a primary key field may be retained in a synthetic dataset and may not be synthesised. Alternatively, a new set of unique identifiers may be generated to populate primary fields of the synthetic extended tables. Any suitable set of unique identifiers may be used which can reference and link to data records in the synthetic extended tables.

At step 306 of the method 300 of FIG. 3, for each synthetic extended child table, measures of similarity are determined between data records in the synthetic extended child table and data records in a synthetic extended parent table which is a parent to the synthetic extended child table. For example, for the synthetic extended enrollment table 506, measures of similarity are determined between data records in the synthetic extended enrollment table 506 and data records in the synthetic extended student table 502 (which is a parent table to the synthetic extended enrollment table 506). Similarly, measures of similarity are also determined between data records in the synthetic extended enrollment table 506 and data records in the synthetic extended student table 502 (which is a parent table to the synthetic extended enrollment table 506).

As was explained above, an extended child table (e.g., the extended enrollment table 410) is generated to include data from one or more parent tables (e.g., the student table 204 and the course table 208). For example, the extended enrollment table 410 includes data such as the age field 214 and the major field 216 from the student table 204 and the type field 224 and credits field 222 from the course table 208. This same data is also included in the extended parent tables. For example, the extended student table 406 also includes the age field 214 and the major field 216. Furthermore, each data record in the extended child table is populated in these fields with data values which correspond to a data record in the extended parent table for the corresponding fields. For example, the first data record in the extended enrollment table 410 is populated with data values "12" and "MATHS" in the age field 214 and major field 216 respectively, which corresponds with the data values in the same fields of the first data record in the extended student table 406.

Similarly, the extended course table 408 also includes the type field 224 and the credits field 222. Furthermore, each data record in the extended enrollment table 410 is populated in these fields with data values which correspond to a data record in the extended course table 408 for the corresponding fields. For example, the first data record in the extended enrollment table 410 is populated with data values "Elective" and "5" in the type field 224 and credits field 222 respectively, which corresponds with the data values in the same fields of the first data record in the extended course table 408.

Given the way that the extended tables are generated, as described above, an extended child table includes some data records in some fields which are copies of data which is also included in an extended parent table to the extended child table. When synthetic extended tables are generated based on these extended tables, synthetic versions of the corresponding data in the extended child table and the extended parent table is generated independently (since single table synthetic table generation techniques may be used to generate each synthetic extended table independently). However, since the generation of synthetic data is configured to mimic the reference data on which it is based, synthetic data which is independently generated for the same data values in the extended child and parent tables will be correlated with each other in the synthetic extended tables and will therefore result in relatively similar data values in the corresponding fields of a synthetic extended child table and a synthetic extended parent table. As will be described in further detail below, measures of similarity between data records in a synthetic extended child table and a synthetic extended parent table may be used to determine links between data records which mimic the links in the original reference relational dataset.

Any suitable measure of similarity may be used. For example, a measure of similarity may comprise a distance between data records in a suitable coordinate space in which data values of a data record can be represented. A distance may comprise a Euclidean distance, a cosine similarity, a Manhatten distance, a Minkowski distance, or any other suitable measure of distance.

In order to determine a measure of similarity between data records, data values in any non-numerical fields may be encoded into a numerical representation, such as a vector representation. For example, data values in categorical data fields (such as the major field 216 and/or type field 224) may be encoded into a numerical representation. In at least some examples, a one-hot encoding method may be used to encode categorical data into a numerical representation. One-hot encoding is a technique which converts each categorical data value into a binary vector. The binary vector may comprise an element which corresponds to each of the possible values of the categorical field where the element is populated with a "1" or "0" to indicate categorical value to which the vector corresponds. That is, the number of elements in the vector may be the same as the number of possible values of the categorical field and each element of the vector may correspond to a particular possible value. For example, there may be three possible data values for the major field 216, which are "Maths", "Physics" and "Chemistry". The major field 216 may therefore be encoded into a binary vector with three elements, each element corresponding to one of the possible data values. A data value of "Maths" may be encoded into a vector (1,0,0), a data value of "Physics" may be encoded into a vector (0,1,0) and a data value of "Chemistry" may be encoded into a vector (0,0,1). In this way, each unique data value is encoded into a different binary vector. One-hot encoding may ensure that categorical data fields are represented in a format suitable for distance-based calculations and without introducing any unintended ordinal relationships between categories.

In some examples, categorical fields may be encoded into numerical representations in the extended tables and the synthetic extended tables may be generated based on the numerical representations of the categorical fields. The synthetic extended tables may therefore already include numerical representations of the categorical fields between which measures of similarity may be determined. In other examples, the extended tables may include text-based representations of categorical fields and thus the subsequently generated synthetic extended tables may also include text-based representations of categorical fields. In such examples, the text-based representations of categorical fields in the synthetic extended tables may be encoded into numerical representations suitable for determining measure of similarity between records.

Data values in one or more numerical fields may be normalised in order to determine measures of similarity (e.g., distances between them). Without normalisation, numerical fields with a relatively large range of values may have a larger influence on determined distances than numerical fields with a relatively small range of values. A plurality of numerical fields may therefore be normalised onto the same range, such as between 0 and 1. Any suitable normalisation method may be used. For example, a Min-Max scaling method may be used to normalise numerical values. The Min-Max scaling method for a field X may comprise determining a normalised value of a date value x in the field X according to equation (1) below, where min(X) is the minimum value in the field X, max(X) is the maximum value in the field X and x is the value for which the normalised age is to be determined.

$$Normalised\ x\ =\ \frac{x - min(X)}{max(X) - min(X)}$$

$$(1)$$

The scaling applied according to equation (1) will generate normalised values in the range of 0 to 1. In other examples, normalisation onto other ranges may be used.

In some examples, when using minimum ($min(X)$) and maximum ($max(X)$) values in a field, these minimum and maximum values may be calculated for the values in the original field in the reference dataset (e.g., in the tables or extended tables in the reference relational dataset) rather than the synthetic values in the synthetic extended tables. This may ensure consistency when comparing extended tables.

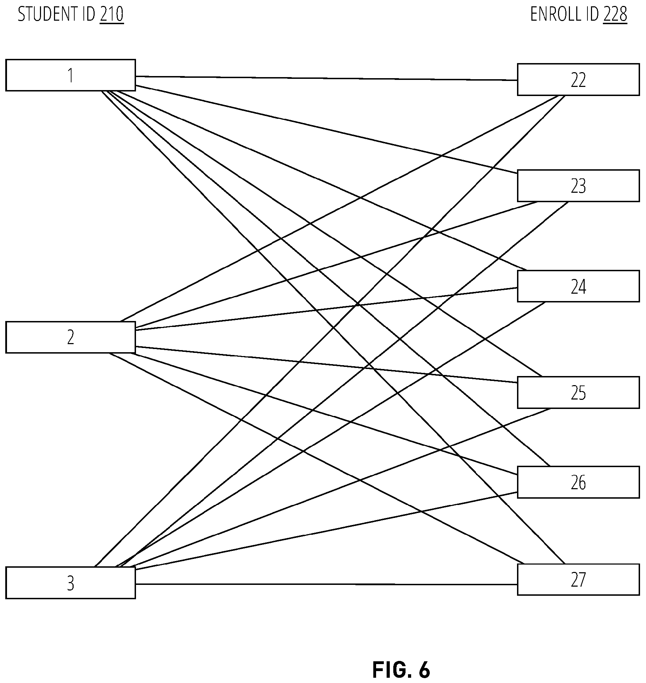

Measures of similarity may be determined between each data record in a synthetic extended child table and each data record in a synthetic extended parent table. FIG. 6 is a schematic illustration of measures measure of similarity which may be determined between data records of the synthetic extended enrollment table 506 and the synthetic extended student table 502. Data records in the synthetic extended student table 502 are represented on the left-hand side of FIG. 6 by boxes in which the different student IDs in the student ID field 210 are shown. Each box with a student ID in represents a data record in the synthetic extended student table 502. Data records in the synthetic extended enrollment table 506 are represented on the right-hand side of FIG. 6 by boxes in which the different enroll IDs in the enroll ID field 228 are shown. Each box with an enroll ID in represents a data record in the synthetic extended enrollment table 506. Each line extending between a student ID and an enroll ID represents a measure of similarity which may be determined between the data records indicated by the student ID and enroll ID between which the line extends.

The measures of similarity may be determined for fields included in the both the synthetic extended child table and the synthetic extended parent table. For example, for the synthetic extended student table 502 and the synthetic extended enrollment table 506, the common fields are the age field 214 and the major field 216. The measures of similarity determined between data records of these synthetic extended tables may therefore be determined for the age field 214 and the major field 216 (the fields which are common to both tables).

The measure of similarity may be determined in an $n$ dimensional space, where $n$ is the number of dimensions for which a measure of similarity is to be determined between data records. Each dimension may correspond to a field. In some examples, a field may correspond to a plurality of dimensions. For example, for a categorical field with $m$ possible values, each data record in this field may be represented by a vector with $m$ elements. Such a categorical field may correspond to $m$ dimensions of the $n$ dimensional space.

For measure of similarity between the synthetic extended enrollment table 506 and the synthetic extended student table 502, there are two common fields (e.g., the age field 214 and the major field 216). The age field 214 comprises single numerical value and therefore is a 1-dimensional data value. The major field 216 is a categorical field with $m$ possible data values, where $m$=3 in the described examples. The measures of similarity between data records may therefore be determined in a 1+3=4 dimensional space.

As was explained above, in at least some examples a determined measure of similarity may comprise a determined distance between data records. In at least some examples, a determined measure of similarity between data records may comprise a Euclidean distance between data records. A Euclidean distance $d$ between two data records in an $n$-dimensional space may be determined according to equation 2 below, where $x_{1i}$ is a data value of a first data record in the i-th dimension and $x_{2i}$ is a data value of a second data record in the i-th dimension.

$$d\left(x_1, x_2\right) = \sqrt{\sum_{i=1}^{n} \left(x_{2i} - x_{1i}\right)^2}$$

$$(2)$$

To provide an illustrative example, a first data record may have a normalised age value of 0.5 and a value in the major field 216 represented by the binary vector (0, 1, 0) and may be represented in an n-dimensional space with the vector $x_1$ = (0.5, 0, 1, 0). A second data record may have a normalised age value of 1.0 and a value in the major field 216 represented by the binary vector (0, 0, 1) and may be represented in an n-dimensional space with the vector $x_2$ = (1.0, 0, 0, 1). The Euclidean distance between these first and second data records may then be calculated according to equation 3 below.

$$d\left(x_1, x_2\right) = \sqrt{(0.5 - 1.0)^2 + (0 - 0)^2 + (1 - 0)^2 + (0 - 1)^2} = \sqrt{2.25} \approx 1.5$$

$$(3)$$

As was explained above, a measure of similarity (which may comprise a distance such as Euclidean distance) may be determined between each data record in a synthetic extended child table and each data record in a synthetic extended parent table (e.g., for all fields which are common to both tables). In this way a matrix of measures of similarity between different data records may be generated, where each element in the matrix represents a measure of similarity between a pair of data records.

An example matrix of measures of similarity is shown in the table below in which the column headers (22-27) are enroll IDs of different data records in the synthetic extended enrollment table 506 and the row headers (1-3) are student IDs of different data records in the synthetic extended student table 502.

|   | 22 | 23 | 24 | 25 | 26 | 27 |
|---|---|---|---|---|---|---|
| 1 | d(1,22) | d(1,23) | d(1,24) | d(1,25) | d(1,26) | d(1,27) |
| 2 | d(2,22) | d(2,23) | d(2,24) | d(2,25) | d(2,26) | d(2,27) |
| 3 | d(3,22) | d(3,23) | d(3,24) | d(3,25) | d(3,26) | d(3,27) |

A corresponding matrix of measures of similarity may be determined for measures of similarity determined between data records in the synthetic extended enrollment table 506 and the synthetic extended course table 504. The measures of similarity of similarity may be determined for fields which are common to both the synthetic extended enrollment table 506 and the synthetic extended course table 504. That is, the measures of similarity may be determined for the type field 224 and the credits field 222.

At step 308 of the method 300 of FIG. 3 for each synthetic extended child table, links between data records in the synthetic extended child table and the synthetic extended parent table are determined. The links are determined in dependence on the determined measures of similarity. The links between data records may be determined in order to link relatively similar data records together. For example, data records which have relatively small determined distances between them may be linked together. In some examples, links between data records may be determined in order to minimise or maximise an overall measure of similarity between linked data records. Whether or not the overall measure of similarity is minimised or maximised will depend on the measure of similarity which is used and whether the measure of similarity is larger or smaller for more similar data records. In examples, in which the measure of similarity comprises a distance (such as a Euclidean distance) more similar data records have a smaller distance between them. In such examples, an overall measure of distance between linked records (such as a total distance or sum of all distances between linked data records) may be minimised.

In at least some examples, the links between data records may be determined subject to some form of condition. For example, a condition may be imposed in order to prevent all data records in the synthetic extended child table being linked to the same or only a few data records in the synthetic extended parent table.

In at least some examples, a field in a synthetic extended parent table which indicates an outdegree of each record of the synthetic extended parent table in the synthetic extended child table. For example, as was described above the extended student table 406 comprises a Q_enrollment field 402 and the extended course table 408 comprises a Q_enrollment field 404. The Q_enrollment field 402 indicates the outdegree of each data record of the extended student table 406 in the extended enrollment table 410. Similarly the Q_enrollment field 404 indicates the outdegree of each data record of the extended course table 408 in the extended enrollment table 410. Correspondingly the synthetic extended student table 502 comprises a Q_enrollment field 402 and the synthetic extended course table 504 comprises a Q_enrollment field 404. The Q_enrollment field 402 of the synthetic extended student table 502 and the Q_enrollment field 404 of the synthetic extended course table 504 are populated with synthetic values indicating the outdegree of data records in the synthetic extended parent tables in the synthetic extended child tables. The Q_enrollment fields 402, 404 of the synthetic extended student table 502 and synthetic extended course table 504 may therefore be indicative of the number of times that each data record in a synthetic extended parent table should be linked to a synthetic extended child table so as to mimic the relationships in the reference relational dataset 202. The Q_enrollment fields 402, 404 of the synthetic extended student table 502 and synthetic extended course table 504 may be used to impose a condition on the linking of data records in the synthetic extended enrollment table 506 to data records in the synthetic extended student table 502 and synthetic extended course table 504.

In at least some examples, links may be determined such that each data record in a synthetic extended parent table is linked to no more data records in a synthetic extended child table than a data value in a field indicating an outdegree of the data record of the synthetic extended parent table in the synthetic extended child table. For example, for a given data record in the synthetic extended student table 502, that data record (which may be referred to as a parent data record) may be linked to no more data records in the synthetic extended enrollment table 506 (which may be referred to as child data records) than a value indicated in the Q_enrollment field 402 for that data record in the synthetic extended student table 502. Similarly, for a given data record in the synthetic extended course table 504, that data record may be linked to no more data records in the synthetic extended enrollment table 506 than a value indicated in the Q_enrollment field 404 for that data record in the synthetic extended course table 504.

The linking of data records in a synthetic extended child table to data records in a synthetic extended parent table may be treated as an optimisation problem in which some measure is maximised or minimised subject to one or more conditions. Such an optimisation problem may be solved by any suitable technique. For example, linear programming techniques may be used to solve an optimisation problem in order to determine links between data records.

In at least some examples, a greedy approach may be used to determine links between data records in a synthetic extended child table and a synthetic extended parent table. A greedy approach may comprise sequentially considering each data record in a synthetic extended parent table or sequentially considered each data record in a synthetic extended child table and allocating the record to the nearest (or most similar) available data record in the other of the synthetic extended parent table or synthetic extended child table.

To provide an illustrative example, a first data record in the synthetic extended student table 502 may be considered and a data record in the synthetic extended enrollment table 506 which has a smallest distance (or greatest degree of similarity) to that record may be selected for linking to the first data record in the synthetic extended student table 502. For example, for the first data record in the synthetic extended student table 502, the smallest distance in the first row of the table of above may be found. The data record in the synthetic extended enrollment table 506 which corresponds to the smallest distance may then be linked to the first data record of the synthetic extended student table 502. The linked data record in the synthetic extended enrollment table 506 may then be marked as unavailable for future links.

If the data value in the Q_enrollment field 402 of the synthetic extended student table 502 is greater than one then one or more further data records in the synthetic extended enrollment table 506 may be linked to the first data record of the synthetic extended student table 502 (e.g., a number of child data records may linked to the parent data record up to the number in the Q_enrollment field 402 for that parent data record). For example, if the data value in the Q_enrollment field 402 of the synthetic extended student table 502 is two then one further data record in the synthetic extended enrollment table 506 may be linked to the first data record of the synthetic extended student table 502 (so that there are a total of two links to that data record). The further data record to link to may be determined by finding the next smallest distance in the first row of the table above.

The process may then move on to the second data record in the synthetic extended student table 502 and a similar process may be carried out to determine the q closest (or most similar) data records in the synthetic extended enrollment table 506 (to the second data record in the synthetic extended student table 502), which remain available (i.e., have not yet been linked to), where q is the data value in the Q_enrollment field 402 of the synthetic extended student table 502 for that data record. Such a process may be sequentially carried out for all data records in the synthetic extended student table 502 such that links are established for all of the data records in the synthetic extended enrollment table 506.

In some examples, a corresponding process may be carried but sequentially considering each data record in the synthetic extended enrollment table 506 (rather than sequentially considering each data record in the synthetic extended student table 502) and finding the closest (or most similar) available data record in the synthetic extended enrollment table 506 and determining a link to that data record. When a data record in the synthetic extended student table 502 has been linked to $q$ number of times (where $q$ is the data value in the Q_enrollment field 402 of the synthetic extended student table 502 for that data record) then that data record may be marked as unavailable and no more links may be determined to that data record. In this way, links may be evenly distributed and linking of all of the records in the synthetic extended enrollment table 506 to the same record in the synthetic extended student table 502 may be avoided.

A corresponding process may also be carried out with respect to the data records in the synthetic extended course table 504 such that links are determined between each data record in the synthetic extended enrollment table 506 and a data record in the synthetic extended course table 504.

Determining links between data records in a synthetic extended child table and a synthetic extended parent table in the manner described herein will establish links between synthetic data records which mimic the links between data records in the reference relational dataset 202. An efficient, accurate and computationally efficient way of generating a synthetic relational dataset is therefore provided.

At step 310 of the method 300 of FIG. 3, synthetic data is generated comprising a plurality of synthetic tables. Each synthetic table corresponds to a table in the reference relational dataset. Furthermore, each synthetic table corresponds to an extended table and a synthetic extended table generated as described herein. Each synthetic table comprises synthetic data included in a corresponding synthetic extended table. For child tables, each synthetic table further comprises a foreign key field populated based on the determined links between data records of the corresponding synthetic extended child table and a synthetic extended parent table (i.e., the links determined at step 308). That is, the links which were determined between data records of a synthetic extended child table and a synthetic extended parent table are used to populate a foreign key of a synthetic child table which corresponds to the synthetic extended child table (for which the links were determined). For example, the foreign key of the synthetic child table may be populated with identifiers corresponding to data records in the synthetic extended parent table to which links were determined. Each synthetic child table may comprise a foreign key for each parent table to the synthetic child table. For example, for a synthetic child table which has two parent tables may comprise two foreign keys where each of the two foreign keys corresponds to different ones of the two parent tables.

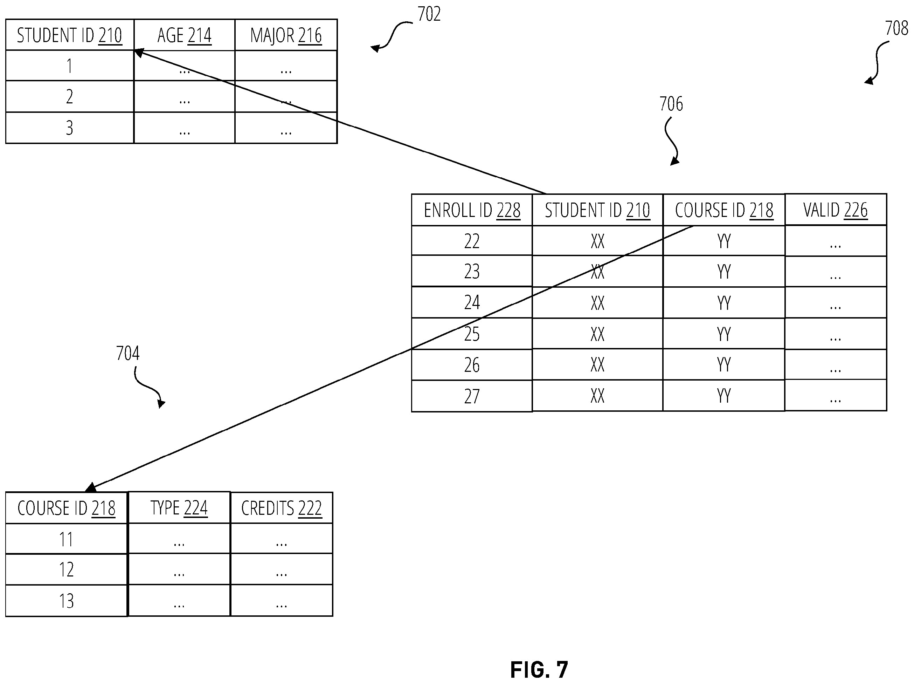

FIG. 7 is a schematic illustration of synthetic tables generated for the reference relational dataset 202 described herein. The synthetic tables include a synthetic student table 702, a synthetic course table 704 and a synthetic enrollment table 706.

The synthetic student table 702 corresponds with the student table 204 in the reference relational dataset 202, the extended student table 406 and the synthetic extended student table 502. The synthetic student table 702 comprises a student ID field 210 (which serves as a primary key for the synthetic student table 702), an age field 214 and a major field 216. At least the age field 214 and the major field 216 are populated with the synthetic data from the corresponding synthetic extended student table 502. The student ID field 210 may be populated with the same identifiers used in the synthetic extended student table 502. The synthetic student table 702 may therefore correspond with the synthetic extended student table 502 except that the Q_enrollment field 402 is deleted (relative to the synthetic extended student table 502). The purpose of the Q_enrollment field 402 was for determining links between data records and once those links are established it may be surplus to requirements and therefore not included in the synthetic student table 702.

The synthetic course table 704 corresponds with the course table 208 in the reference relational dataset 202, the extended course table 408 and the synthetic extended course table 504. The synthetic course table 704 comprises a course ID field 218 (which serves as a primary key for the synthetic course table 704), type field 224 and a credits field 222. At least the type field 224 and the credits field 222 are populated with the synthetic data from the corresponding synthetic extended course table 504. The course ID field 218 may be populated with the same identifiers used in the synthetic extended course table 504. The synthetic course table 704 may therefore correspond with the synthetic extended course table 504 except that the Q_enrollment field 404 is deleted (relative to the synthetic extended course table 504). The purpose of the Q_enrollment field 404 was for determining links between data records and once those links are established it may be surplus to requirements and therefore not included in the synthetic course table 704.

The synthetic enrollment table 706 corresponds with the enrollment table 206 in the reference relational dataset 202, the extended enrollment table 410 and the synthetic extended enrollment table 506. The synthetic enrollment table 706 comprises an enroll ID field 228 (which serves as a primary key for the synthetic enrollment table 706), student ID field 210, course ID field 218 and a valid field 226. The valid field 226 is populated with the synthetic data from the corresponding synthetic extended enrollment table 506. The enroll ID field 228 may be populated with the same identifiers used in the synthetic extended enrollment table 506. The synthetic enrollment table 706 may therefore correspond with the synthetic extended enrollment table 506 except that the age field 214 and major field 216 are replaced with the student ID field 210 and the type field 224 and credits field 222 are replaced with the course ID field 218.

The student ID field 210 serves as a foreign key to indicate links to data records in the synthetic student table 702 and the course ID field 218 serves as a foreign key to indicate links to data records in the synthetic course table 704. The student ID field 210 is populated with data values from the student ID field 210 of the synthetic enrollment table 706. In particular, the student ID field 210 of the synthetic enrollment table 706 is populated with student IDs corresponding to the data records in the synthetic student table 702 (or equivalently the synthetic extended student table 502) to which the corresponding data record of the synthetic extended enrollment table 506 were linked in step 308. For example, if a link between the first data record of the synthetic extended enrollment table 506 and the first data record of the synthetic extended student table 502 was determined in step 308 then the student ID field 210 of the synthetic enrollment table 706 will be populated with the student ID in the first data record of the synthetic extended student table 502 (and/or synthetic student table 702).

Similarly to the student ID field 210, the course ID field 218 of the synthetic enrollment table 706 is populated with data values from the course ID field 218 of the synthetic enrollment table 706. In particular, the course ID field 218 of the synthetic enrollment table 706 is populated with course IDs corresponding to the data records in the synthetic course table 704 (or equivalently the synthetic extended course table 504) to which the corresponding data record of the synthetic extended enrollment table 506 were linked in step 308. For example, if a link between the first data record of the synthetic extended enrollment table 506 and the first data record of the synthetic extended course table 504 was determined in step 308 then the course ID field 210 of the synthetic enrollment table 706 will be populated with the course ID in the first data record of the synthetic extended course table 504 (and/or synthetic course table 704).

The foreign keys in the synthetic enrollment table 706 (the student ID field 210 and the course ID field 218) establish links between the synthetic enrollment table 706, the synthetic student table 702 and the synthetic course table 704. Accordingly, the data from the parent tables (synthetic student table 702, synthetic course table 704) is no longer needed in the child table (synthetic enrollment table 706). The age field 214, major field 216, type field 224 and credits field 222 which were included in the synthetic extended enrollment table 506 are therefore emitted from the synthetic enrollment table 706 since they are obsolete in light of the foreign keys in the synthetic enrollment table 706.

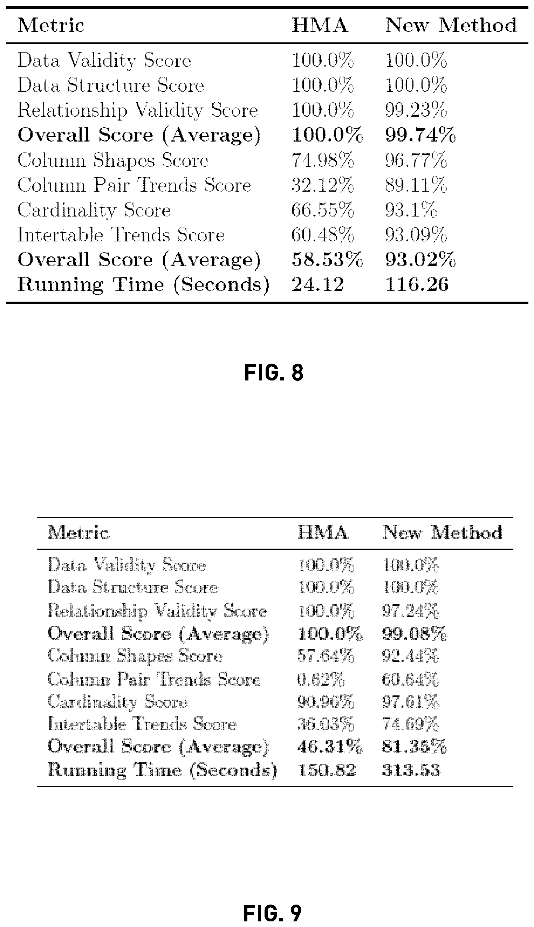

The synthetic student table 702, synthetic course table 704 and synthetic enrollment table 706 form a synthetic relational dataset 708 comprising a plurality of tables 702, 704, 706 and a plurality of relationships between the tables (in the form of the established links described above). Due to the way in which the synthetic relational dataset 708 is generated according to methods described herein, the synthetic relational dataset 708 mimics the reference relational dataset 202 on which it is based. It has been found that the methods described herein provide a particularly accurate synthesis of a relational dataset in a computationally efficient manner. The methods disclosed herein have been tested on a number of reference relational datasets and in some cases results have been compared with results returned using existing methods. A sample of such results, which demonstrate the utility and performance of the methods disclosed herein will be described below with reference to FIG. 8, FIG. 9, FIG. 10 and FIG. 11

FIG. 8 is a table showing comparative results of generating a synthetic relational dataset using methods as described herein and using an existing method. To generate the results shown in FIG. 8 a reference relational dataset referred to as the DCG dataset [6] was used. The DCG dataset comprises comprises two tables. A first table titled a sentences table comprises 1129 data records in two fields. The sentences table is a parent table to a second table titled a terms table. The terms table comprises 7127 data records in four fields. The terms table includes a primary key and a foreign key linking to a primary key of the sentences table.

Two methods were used to generate a synthetic relational dataset based on the DCG dataset. Both methods were used to generate a synthetic relational dataset having a size of approximately 10% of the reference relational dataset (the DCG dataset). In a first method, an HMA synthesiser provided as part of the Synthetic Data Vault (SDV) model [2] was used to generate a first synthetic relational dataset. In a second method, a method as described herein (e.g., a method 300 as described above with reference to FIG. 3) was used to generate a second synthetic relational dataset. In the second method extended tables were generated for each table and synthetic extended tables were then generated independently of each other based on the extended tables. The synthetic extended tables were generated using the Synthpop [3] package. Measures of similarity were then determined between data records in the synthetic extended tables and used to determine links between data records in the synthetic extended tables, as described above. In particular, Euclidean distances were calculated between data records and a greedy approach was used to link data records in a synthetic extended parent table to data records in a synthetic extended child table (whilst not exceeding a synthetic outdegree number of each parent data record). The second synthetic relational dataset was then generated including synthetic data from the extended synthetic extended tables and for the child table a foreign key populated based on the links which were determined between data records in the synthetic extended tables.

In order to assess and compare the first synthetic relational dataset and the second synthetic relational dataset, a series of metrics were generated based on the two synthetic relational datasets. The metrics [10] are generated using the SDV diagnostic report [4] and the SDV quality report [5]. These reports compare a reference relational dataset and a generated synthetic relational dataset to determine a series of metrics to assess the extent to which the synthetic relational dataset accurately mimics the reference relational dataset.

The table shown in FIG. 8 provides a Data Validity Score, Data Structure Score, Relationship Validity Score, Column Shapes Score, Column Pair Trends Score, Cardinality Score and Intertable Trends Score for both the first synthetic relational dataset and the second synthetic relational dataset. Scores for the first synthetic relational dataset, which was generated using the HMA synthesiser, are shown in the column headed "HMA". Scores for the second synthetic relational dataset, which was generated using methods described herein, are shown in the column headed "New Method". Also shown in the table of FIG. 8 is a computational running time (the same computer was used for both methods) to generate each synthetic relational dataset.

The Data Validity Score is a property indicative of whether each column contains valid data. This metric is based on the type data in each column (field).

The Data Structure Score is a property indicative of whether the overall structure of the synthetic data is the same as the reference data for which it is generated. This property is calculated for each table and then averaged.

The Relationship Validity Score is a property indicative of the validity of the relationships from a primary key and a foreign key perspective. Computation of this metric includes computation of two submetrics called ReferentialIntegrity and CardinalityBoundaryAdherence. The ReferentialIntegrity submetric includes computing a fraction of foreign key values that reference a value in the primary key column in the synthetic data. The CardinalityBoundaryAdherence submetric includes computing the percentage of synthetic parents whose cardinality falls within a min/max range of cardinality in the reference data.

The Column Shapes Score is a property which assesses a shape similarity between the reference dataset and the synthetic data. A metric score is computed column-wise and the final score is the average over all columns. A KSComplement metric is used for numerical and datetime columns while a TVComplement metric is used for categorical and boolean columns. The other column types are ignored by this property.

The Column Pair Trends Score is a property which evaluates a matching in trends between pairs of reference and synthetic data columns across related tables. Each pair's correlation is calculated and the final score represents the average of these measures across all column pairs.

The Cardinality Score is a metric which is indicative of a similarity of a cardinality. Computation of this metric comprises computing a cardinality distributions for the reference and synthetic data for each (parent, child) relationship. A 'KSComplement' is then computed over the two cardinality distributions, and the final scores are compared to obtain the cardinality shape similarity score.

The Intertable Trends Score is a property which included evaluating a matching in trends between pairs of real and synthetic data columns across related tables. A pair's correlation is calculated and the final score represents the average of these measures across all column pairs.

As can be seen in the table of FIG. 8 both synthetic relational datasets achieve high scores for the Data Validity Score, Data Structure Score and Relationship Validity Score. The second synthetic relational dataset (generated using methods as described herein) significantly outperforms the first synthetic relational dataset (generated using the HMA package) in the Column Shapes Score, Column Pair Trends Score, Cardinality Score and Intertable Trends Score which are each trend-related metrics. These results therefore demonstrate a large improvement in accurately miming the relationships in a reference relational dataset when compared to existing methods.

FIG. 9 is a table showing further comparative results of generating a synthetic relational dataset using methods as described herein and using an existing method. To generate the results shown in FIG. 9 a reference relational dataset referred to as the CORA dataset [7] was used. The CORA dataset comprises comprises three tables. A first table titled a paper table comprises 2707 data records in two fields. The paper table is a parent table to a second table titled a cites table and a parent table to a third table titled a content table. The cites table comprises 5428 data records in four fields. The content table comprises 49215 data record in four fields. Both the cites table and the content table each include a primary key and a foreign key linking to a primary key of the paper table.

Corresponding methods to those described above with reference to the results shown in FIG. 8 were also used to generate a first synthetic relational dataset (using the HMA synthesiser) and a second synthetic relational dataset (using methods described herein) based on the CORA dataset. Both methods were used to generate a synthetic relational dataset having a size of approximately 10% of the reference relational dataset (the CORA dataset).

In order to assess and compare the first synthetic relational dataset and the second synthetic relational dataset generated for the CORA dataset, the same metrics as those described above with reference to FIG. 8 were also generated based on the two synthetic relational datasets. The metrics generated for the first synthetic relational dataset and the second synthetic relational dataset generated for the CORA dataset are shown in the table in FIG. 9 in a corresponding manner.

As can be seen in the table of FIG. 9, similarly to the results shown in FIG. 8, both synthetic relational datasets achieve high scores for the Data Validity Score, Data Structure Score and Relationship Validity Score. Once again, the second synthetic relational dataset (generated using methods as described herein) significantly outperforms the first synthetic relational dataset (generated using the HMA package) in the Column Shapes Score, Column Pair Trends Score, Cardinality Score and Intertable Trends Score which are each trend-related metrics. These results therefore further demonstrate a large improvement in accurately miming the relationships in a reference relational dataset when compared to existing methods.

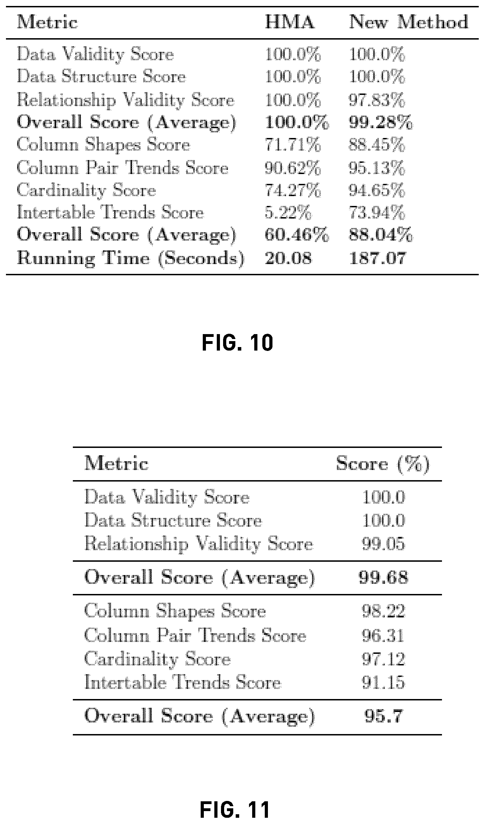

FIG. 10 is a table showing still further comparative results of generating a synthetic relational dataset using methods as described herein and using an existing method. To generate the results shown in FIG. 10 a reference relational dataset referred to as the Biodegradability dataset [8] was used. The Biodegradability dataset comprises comprises five tables. A first table titled a molecule table comprises 327 data records in four fields. The molecule table is a parent table to a second table titled an atom table comprising 6567 data records in three fields. The atom table includes a primary key and a foreign key linking to a primary key of the molecule table. The atom table is a parent table to a third table titled a bond table comprising 6615 data records in four fields. The bond table includes a primary key and two foreign keys each linking to a primary key of the atom table. The atom table is also a parent table to a fourth table titled a gmember table comprising 6646 data records in three fields. The gmember table is also a child table to a fifth table titled a group table comprising 1735 data records in two fields. The gmember table includes a primary key, a first foreign key linking to the primary key of the atom table and a second primary key linking to a primary key of the group table.

Corresponding methods to those described above with reference to the results shown in FIG. 8 were also used to generate a first synthetic relational dataset (using the HMA synthesiser) and a second synthetic relational dataset (using methods described herein) based on the Biodegradability dataset. Both methods were used to generate a synthetic relational dataset having a size of approximately 10% of the reference relational dataset (the Biodegradability dataset).

In order to assess and compare the first synthetic relational dataset and the second synthetic relational dataset generated for the Biodegradability dataset, the same metrics as those described above with reference to FIG. 8 were also generated based on the two synthetic relational datasets. The metrics generated for the first synthetic relational dataset and the second synthetic relational dataset generated for the Biodegradability dataset are shown in the table in FIG. 10 in a corresponding manner.

As can be seen in the table of FIG. 10, similarly to the results shown in FIG. 8 and in FIG. 9, both synthetic relational datasets achieve high scores for the Data Validity Score, Data Structure Score and Relationship Validity Score. Once again, the second synthetic relational dataset (generated using methods as described herein) significantly outperforms the first synthetic relational dataset (generated using the HMA package) in the Column Shapes Score, Column Pair Trends Score, Cardinality Score and Intertable Trends Score which are each trend-related metrics. These results therefore further demonstrate a large improvement in accurately miming the relationships in a reference relational dataset when compared to existing methods.

FIG. 11 is a table showing still further comparative results of generating a synthetic relational dataset using methods as described herein and using an existing method. To generate the results shown in FIG. 11 a reference relational dataset referred to as the imdb_MovieLens [9] dataset was used. The imdb_MovieLens dataset comprises comprises seven tables. A first table titled an actor table comprises 98689 data records in three fields. The actor table is a parent table to a second table titled a movies2actors table comprising 138,348 data records in four fields. The movies2actors table is also a child table to a third table titled a movies table comprising 3831 data records in five fields. The movies2actors table includes a primary key, a first foreign key linking to a primary key of the actor table and a second foreign key linking to a primary key of the movies table. The movies table is also a parent table to fourth table titled a u2base table comprising 996,158 data records in four fields and a fifth table titled movies2directors comprising 4140 data records in four fields. The u2base table is also a child table to a sixth table titled users comprising 6038 data records in four fields. The u2base table includes a primary key, a first foreign key linking to a primary key of the movies table and a second foreign key linking to a primary key of the users table. The movies2directors table is also a child table to a seventh table titled a directors table comprising 2,200 data records in four fields. The movies2directors table includes a primary key, a first foreign key linking to the primary key of the movies table and a second foreign key linking to a primary key of the directors table.

A corresponding method to that described above with reference to the results shown in FIG. 8 was used to generate a synthetic relational dataset using methods described herein and based on the imdb_MovieLens dataset. The synthetic relational dataset was generated to have a size of approximately 10% of the reference relational dataset (the imdb_MovieLens dataset).

In order to assess the generated synthetic relational dataset, the same metrics as those described above with reference to FIG. 8 were also generated based on the synthetic relational dataset. The metrics generated for the synthetic relational dataset generated for the imdb_MovieLens dataset are shown in the table in FIG. 11 in a corresponding manner (but without a comparison to a second synthetic relational dataset).

As can be seen in the table of FIG. 11, similarly to the results shown in FIG. 8, FIG. 9 and in FIG. 10, the generated synthetic relational dataset achieves high scores for the Data Validity Score, Data Structure Score and Relationship Validity Score. The generated synthetic relational dataset (generated using methods as described herein) also achieves high scores in the Column Shapes Score, Column Pair Trends Score, Cardinality Score and Intertable Trends Score which are each trend-related metrics. These results therefore further demonstrate the ability of the methods disclosed herein to accurately mimic the relationships in a reference relational dataset.

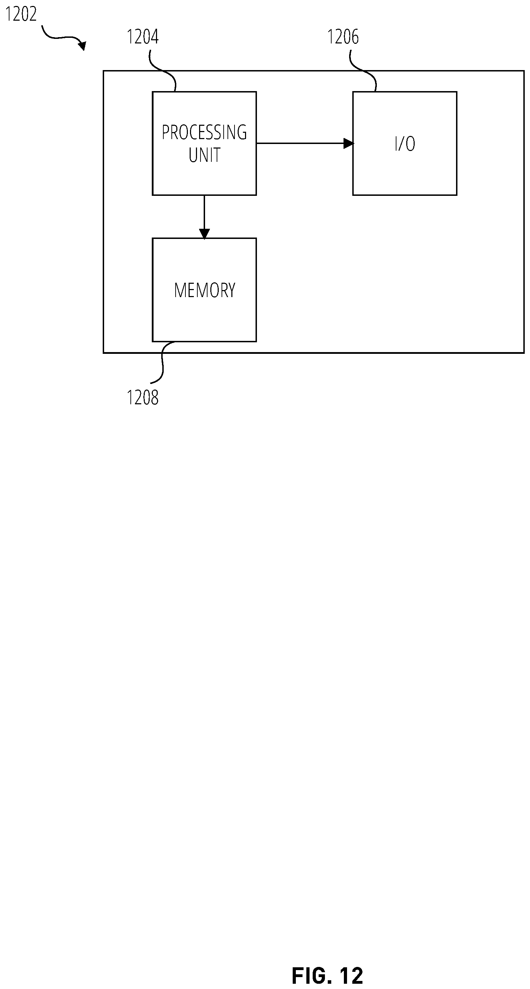

Various methods have been described herein in which some of the method steps may be implemented on any suitable electronic device (such as a computing device) and/or combination of electronic devices (e.g. computing devices). FIG. 12 is a schematic illustration of an example electronic device 1202 which may be used to implement all or part of any method described herein. For example, an electronic device 1202 of the type shown in FIG. 12 and as described below may be used to implement all or part of a method of generating synthetic data as described herein. For example, one or more electronic devices 1202 of the type shown in FIG. 12 and as described below may be used to implement all or part of a method 300 as described above with reference to FIG. 3.

The electronic device 1202 may include at least one processing unit 1204, memory 1208 and an input/output interface 1206 (I/O). The processing unit 1204 may include any suitable processor and/or combination of processors. For example, the processing unit 1204 may include one or more of a Central Processing Unit (CPU) and a Graphical Processing Unit (GPU). The memory 1208 may include volatile memory and/or non-volatile/persistent memory. The memory 1208 may, for example, be used to store data such as an operating system, instructions to be executed by the processing unit (e.g. in the form of software to be executed by the processing unit), configuration information related to the electronic device 1202, session information and/or configuration or registration information associated with any other device, node or module in the network. In some examples, the memory 1208 may be used to store instructions for executing any of the methods disclosed herein.

At least the processing unit 1204 is connected to the input/output interface 1206. The input/output interface 1206 may facilitate communication with one or more other devices. For example, the input/output interface 1206 may be operable to transmit and/or receive communications to/from other devices in a network. The input/output interface 1206 may, for example, comprise one or more antennas to facilitate wireless communication with one or more other devices.

Optionally, the electronic device 1202 may further include a display (not shown). The display may comprise any suitable electronic display such as a touch sensitive display. The display may be connected to at least to the processing unit 1204. The processing unit 1204 may generate display signals which are sent to the display in order to cause the display information.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. In particular, any dependent claims may be combined with any of the independent claims and any of the other dependent claims.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

References

[1] Aivin V. Solatoria, Olivier Dupriez, "REaLTabFormer: Generating Realistic Relational and Tabular Data using Transformers", arXiv:2302.02041.

[2] Neha Patki, Roy Wedge, and Kalyan Veeramachaneni, "The synthetic data vault", 2016 IEEE International Conference on Data Science and Advanced Analytics (DSAA), pages 399-410. IEEE, 2016.

[3] Nowok, B., Raab, G. M., & Dibben, C. "synthpop: Bespoke Creation of Synthetic Data in R", Journal of Statistical Software, 74(11), 1-26. https://doi.org/10.18637/jss.v074.i11, 2016.

[4] https://docs.sdv.dev/sdmetrics/reports/diagnostic-report/multi-table-api

[5] https://docs.sdv.dev/sdmetrics/reports/quality-report/multi-table-api

[6] https://relational.fel.cvut.cz/dataset/DCG

[7] https://relational-data.org/dataset/CORA

[8] https://relational-data.org/dataset/Biodegradability

[9] https://relational-data.org/dataset/IMDb

[10] https://github.com/sdv-dev/SDMetrics

**Claims**

1. A computer-implemented method of generating synthetic data based on a reference relational dataset comprising a plurality of tables and a plurality of relationships between the tables, wherein each table comprises a plurality of data records for a plurality of fields and wherein the plurality of relationships between tables establish each table as one or both of a child table and a parent table, wherein a child table includes a foreign key field containing links to data included in a parent table, wherein the method comprises:

   generating, for each table in the reference relational dataset, a corresponding extended table comprising: at least a subset of the data in the table of the reference relational dataset; and if the table is a child table, at least a subset of data in a parent table to which the child table includes links;
   generating, for each extended table, a corresponding synthetic extended table configured to mimic the extended table for which it is generated;
   for each synthetic extended child table:

      determining measures of similarity between data records in the synthetic extended child table and data records in a synthetic extended parent table to the synthetic extended child table; and
      determining, in dependence on the determined measures of similarity, links between data records in the synthetic extended child table and data records in the synthetic extended parent table; and

   generating synthetic data comprising a plurality of synthetic tables, each synthetic table corresponding to a table in the reference relational dataset, wherein each synthetic table comprises synthetic data included in a corresponding synthetic extended table and for child tables, a foreign key field populated based on the determined links between data records of the synthetic extended child table and a synthetic extended parent table.

2. The computer-implemented method of claim 1, wherein the generated extended tables further comprise: if the table is a parent table, a field for each child table to the parent table indicating an outdegree of each record of the parent table in the child table.

3. The computer-implemented method of claim 2, wherein the determining links between data records in the synthetic extended child table and data records in the synthetic extended parent table comprises determining the links in dependence on the determined measures of similarity and on data values in the field in the synthetic extended parent table indicating an outdegree of each record of the synthetic extended parent table in the synthetic extended child table.

4. The computer-implemented method of claim 3, the determining the links in dependence on the determined measures of similarity and on data values in the field in the synthetic extended parent table indicating an outdegree of each record of the synthetic extended parent table in the synthetic extended child table comprises determining the links such that each data record in the synthetic extended parent table is linked to no more data records in the synthetic extended child table than the data value in the field indicating an outdegree of the data record of the synthetic extended parent table in the synthetic extended child table.

5. The computer-implemented method of any one of claims 1 to 3 wherein the determining measures of similarity between data records in the synthetic extended child table and data records in a synthetic extended parent table to the synthetic extended child table comprises determining the measures of similarity for fields included in the synthetic extended child table and the synthetic extended parent table.

6. The computer-implemented method of any one of claims 1 to 5, wherein the determining measures of similarity between data records comprises determining a measure of distance between the data records.

7. The computer-implemented method of any one of claims 1 to 6, comprising, for fields in the synthetic extended tables which are populated with numerical values, normalising the numerical values; and
wherein the determining measures of similarity between data records comprises determining measures of similarity between the normalised numerical values.

8. The computer-implemented method of any one of claims 1 to 7, comprising, for fields in the synthetic extended tables which correspond to categorical data, encoding categorical data into a numerical representation of the categorical data; and
wherein the determining measures of similarity between data records comprises determining measures of similarity between the numerical representation of the categorical data.

9. The computer-implemented method of claim 8, wherein the encoding the categorical data comprises encoding the categorical data included in an extended table corresponding to the synthetic extended table.

10. The computer-implemented method of any one of claims 1 to 9, wherein the determining, in dependence on the determined measures of similarity, links between data records in the synthetic extended child table and data records in the synthetic extended parent table, comprises determining the links so as to link relatively similar data records.

11. The computer-implemented method of any one of claims 1 to 10, wherein the determining, in dependence on the determined measures of similarity, links between data records in the synthetic extended child table and data records in the synthetic extended parent table, comprises determining the links so as to maximise an overall similarity between linked data records.

12. The computer-implemented method of any one of claims 1 to 11, wherein the determining, in dependence on the determined measures of similarity, links between data records in the synthetic extended child table and data records in the synthetic extended parent table, comprises determining the links so as to minimise a total distance between linked data records.

13. A computer-readable medium comprising instructions which, when executed by a computing apparatus, cause the computing apparatus to carry out the method of any one of claims 1 to 12.

14. Computing apparatus comprising:

one or more processors; and
memory comprising instructions which when executed by one or more of the processors cause the computing apparatus to be operable to perform a method according to any one of claims 1 to 12.

**FIG. 1**

202

204

Table 230

| STUDENT ID 210 | STUDENT NAME 212 | AGE 214 | MAJOR 216 |
|---|---|---|---|
| 1 | John | 12 | Maths |
| 2 | Jane | 14 | Physics |
| 3 | Alice | 16 | Chemistry |

236

206

234

Table 236 / 238

| ENROLL ID 228 | STUDENT ID 210 | COURSE ID 218 | VALID 226 |
|---|---|---|---|
| 22 | 1 | 11 | Y |
| 23 | 2 | 12 | Y |
| 24 | 3 | 13 | Y |
| 25 | 1 | 12 | Y |
| 26 | 2 | 13 | Y |
| 27 | 3 | 11 | N |

208

232

| COURSE ID 218 | COURSE NAME 220 | CREDITS 222 | TYPE 224 |
|---|---|---|---|
| 11 | Calculus | 5 | Elective |
| 12 | Mechanics | 4 | Elective |
| 13 | Statistics | 3 | Mandatory |

FIG. 2

300

GENERATE, FOR EACH TABLE IN THE REFERENCE RELATIONAL DATASET, A CORRESPONDING EXTENDED TABLE COMPRISING: AT LEAST A SUBSET OF THE DATA IN THE TABLE OF THE REFERENCE RELATIONAL DATASET; AND IF THE TABLE IS A CHILD TABLE, AT LEAST A SUBSET OF DATA IN A PARENT TABLE TO WHICH THE CHILD TABLE INCLUDES LINKS 302

GENERATE, FOR EACH EXTENDED TABLE, A CORRESPONDING SYNTHETIC EXTENDED TABLE CONFIGURED TO MIMIC THE EXTENDED TABLE FOR WHICH IT IS GENERATED 304

FOR EACH SYNTHETIC EXTENDED CHILD TABLE, DETERMINE MEASURES OF SIMILARITY BETWEEN DATA RECORDS IN THE SYNTHETIC EXTENDED CHILD TABLE AND DATA RECORDS IN A SYNTHETIC EXTENDED PARENT TABLE TO THE SYNTHETIC EXTENDED CHILD TABLE 306

FOR EACH SYNTHETIC EXTENDED CHILD TABLE, DETERMINE, IN DEPENDENCE ON THE DETERMINED MEASURES OF SIMILARITY, LINKS BETWEEN DATA RECORDS IN THE SYNTHETIC EXTENDED CHILD TABLE AND DATA RECORDS IN THE SYNTHETIC EXTENDED PARENT TABLE 308

GENERATE SYNTHETIC DATA COMPRISING A PLURALITY OF SYNTHETIC TABLES, EACH SYNTHETIC TABLE CORRESPONDING TO A TABLE IN THE REFERENCE RELATIONAL DATASET, WHEREIN EACH SYNTHETIC TABLE COMPRISES SYNTHETIC DATA INCLUDED IN A CORRESPONDING SYNTHETIC EXTENDED TABLE AND FOR CHILD TABLES, A FOREIGN KEY FIELD POPULATED BASED ON THE DETERMINED LINKS BETWEEN DATA RECORDS OF THE SYNTHETIC EXTENDED CHILD TABLE AND A SYNTHETIC EXTENDED PARENT TABLE 310

**FIG. 3**

406

| STUDENT ID 210 | AGE 214 | MAJOR 216 | Q_ENROLLMENT 402 |
|---|---|---|---|
| 1 | 12 | Maths | 2 |
| 2 | 14 | Physics | 2 |
| 3 | 16 | Chemistry | 2 |

410

| ENROLL ID 228 | AGE 214 | MAJOR 216 | TYPE 224 | CREDITS 222 | VALID 226 |
|---|---|---|---|---|---|
| 22 | 12 | MATHS | Elective | 5 | Y |
| 23 | 14 | PHYSICS | Elective | 4 | Y |
| 24 | 16 | CHEMISTRY | Mandatory | 3 | Y |
| 25 | 12 | MATHS | Elective | 4 | Y |
| 26 | 14 | PHYSICS | Mandatory | 3 | Y |
| 27 | 16 | CHEMISTRY | Elective | 5 | N |

408

| COURSE ID 218 | TYPE 224 | CREDITS 222 | Q_ENROLLMENT 404 |
|---|---|---|---|
| 11 | Elective | 5 | 2 |
| 12 | Elective | 4 | 2 |
| 13 | Mandatory | 3 | 2 |

**FIG. 4**

| STUDENT ID 210 | AGE 214 | MAJOR 216 | Q_ENROLLMENT 402 |
|---|---|---|---|
| 1 | ... | ... | ... |
| 2 | ... | ... | ... |
| 3 | ... | ... | ... |

502

506

| ENROLL ID 228 | AGE 214 | MAJOR 216 | TYPE 224 | CREDITS 222 | VALID 226 |
|---|---|---|---|---|---|
| 22 | ... | ... | ... | ... | ... |
| 23 | ... | ... | ... | ... | ... |
| 24 | ... | ... | ... | ... | ... |
| 25 | ... | ... | ... | ... | ... |
| 26 | ... | ... | ... | ... | ... |
| 27 | ... | ... | ... | ... | ... |

504

| COURSE ID 218 | TYPE 224 | CREDITS 222 | Q_ENROLLMENT 404 |
|---|---|---|---|
| 11 | ... | ... | ... |
| 12 | ... | ... | ... |
| 13 | ... | ... | ... |

**FIG. 5**

STUDENT ID <u>210</u>                    ENROLL ID <u>228</u>

**FIG. 6**

EP 4 708 070 A1

708

702

Table (702):

| STUDENT ID 210 | AGE 214 | MAJOR 216 |
|---|---|---|
| 1 | ... | ... |
| 2 | ... | ... |
| 3 | ... | ... |

706

Table (706):

| ENROLL ID 228 | STUDENT ID 210 | COURSE ID 218 | VALID 226 |
|---|---|---|---|
| 22 | XX | YY | ... |
| 23 | XX | YY | ... |
| 24 | XX | YY | ... |
| 25 | XX | YY | ... |
| 26 | XX | YY | ... |
| 27 | XX | YY | ... |

704

Table (704):

| COURSE ID 218 | TYPE 224 | CREDITS 222 |
|---|---|---|
| 11 | ... | ... |
| 12 | ... | ... |
| 13 | ... | ... |

FIG. 7

| Metric | HMA | New Method |
|---|---|---|
| Data Validity Score | 100.0% | 100.0% |
| Data Structure Score | 100.0% | 100.0% |
| Relationship Validity Score | 100.0% | 99.23% |
| **Overall Score (Average)** | **100.0%** | **99.74%** |
| Column Shapes Score | 74.98% | 96.77% |
| Column Pair Trends Score | 32.12% | 89.11% |
| Cardinality Score | 66.55% | 93.1% |
| Intertable Trends Score | 60.48% | 93.09% |
| **Overall Score (Average)** | **58.53%** | **93.02%** |
| **Running Time (Seconds)** | **24.12** | **116.26** |

## FIG. 8

| Metric | HMA | New Method |
|---|---|---|
| Data Validity Score | 100.0% | 100.0% |
| Data Structure Score | 100.0% | 100.0% |
| Relationship Validity Score | 100.0% | 97.24% |
| **Overall Score (Average)** | **100.0%** | **99.08%** |
| Column Shapes Score | 57.64% | 92.44% |
| Column Pair Trends Score | 0.62% | 60.64% |
| Cardinality Score | 90.96% | 97.61% |
| Intertable Trends Score | 36.03% | 74.69% |
| **Overall Score (Average)** | **46.31%** | **81.35%** |
| **Running Time (Seconds)** | **150.82** | **313.53** |

## FIG. 9

| Metric | HMA | New Method |
|---|---|---|
| Data Validity Score | 100.0% | 100.0% |
| Data Structure Score | 100.0% | 100.0% |
| Relationship Validity Score | 100.0% | 97.83% |
| **Overall Score (Average)** | **100.0%** | **99.28%** |
| Column Shapes Score | 71.71% | 88.45% |
| Column Pair Trends Score | 90.62% | 95.13% |
| Cardinality Score | 74.27% | 94.65% |
| Intertable Trends Score | 5.22% | 73.94% |
| **Overall Score (Average)** | **60.46%** | **88.04%** |
| **Running Time (Seconds)** | **20.08** | **187.07** |

**FIG. 10**

| Metric | Score (%) |
|---|---|
| Data Validity Score | 100.0 |
| Data Structure Score | 100.0 |
| Relationship Validity Score | 99.05 |
| **Overall Score (Average)** | **99.68** |
| Column Shapes Score | 98.22 |
| Column Pair Trends Score | 96.31 |
| Cardinality Score | 97.12 |
| Intertable Trends Score | 91.15 |
| **Overall Score (Average)** | **95.7** |

**FIG. 11**

1202

1204

1206

```
PROCESSING
UNIT
```

```
I/O
```

```
MEMORY
```

1208

**FIG. 12**

Europäisches
Patentamt
European
Patent Office
Office européen
des brevets

# EUROPEAN SEARCH REPORT

**Application Number**

EP 25 20 1444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 713 384 B2 (MASSACHUSETTS INST TECHNOLOGY [US] ET AL.) 14 July 2020 (2020-07-14) * figures 1,3,9 * * claim 23 * * paragraphs [0007], [0010], [0019] * * paragraphs [0072], [0078], [0197] * ----- | 1-14 | INV. G06F16/28 G06F21/62 |

**TECHNICAL FIELDS SEARCHED (IPC)**

G06F

The present search report has been drawn up for all claims

| Place of search | Date of completion of the search | Examiner |
|---|---|---|
| Munich | 22 January 2026 | Michalski, Stéphane |

EPO FORM 1503 03.82 (P04C01)

## ANNEX TO THE EUROPEAN SEARCH REPORT
## ON EUROPEAN PATENT APPLICATION NO.

EP 25 20 1444

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2026

| Patent document cited in search report | Publication date | Patent family member(s) | Publication date |
|---|---|---|---|
| US 10713384 B2 | 14-07-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AIVIN V. SOLATORIA** ; **OLIVIER DUPRIEZ**. REaLTabFormer: Generating Realistic Relational and Tabular Data using Transformers. *arXiv:2302.02041*
- The synthetic data vault. **NEHA PATKI** ; **ROY WEDGE** ; **KALYAN VEERAMACHANENI**. 2016 IEEE International Conference on Data Science and Advanced Analytics (DSAA). IEEE, 2016, 399-410

- **NOWOK, B.** ; **RAAB, G. M** ; **DIBBEN, C.** synthpop: Bespoke Creation of Synthetic Data in R. *Journal of Statistical Software*, 2016, vol. 74 (11), 1-26, https://doi.org/10.18637/jss.v074.i11